# EUROPEAN PATENT SPECIFICATION

(11) **EP 1 736 761 B1**
(45) Date of publication and mention of the grant of the patent: **03.08.2011**
(21) Application number: 05013647.2
(22) Date of filing: 24.06.2005
(51) Int. Cl.: G01N 27/12

(54) **Dryer with a humidity sensor**
Wäschetrockner mit Feuchtesensor
Sèche-linge avec capteur d'humidité

(43) Date of publication of application: 27.12.2006
(60) Divisional application: 06010445.2
(73) Proprietor: Electrolux Home Products Corporation N.V., 1130 Brussel (BE)
(72) Inventor: Hergott, Norbert, 91207 Lauf (DE)
(74) Representative: Baumgartl, Gerhard Willi

(56) References cited:
- EP-A- 1 236 826
- US-A- 2 740 032
- US-A- 4 385 452
- EPCOS AG: "NTC Probe for HVAC and Home Appliances" EPCOS AG, 2002, XP002353583
- "Hygroclip- Humidity goes digital" ROTRONIC, [Online] February 2002 (2002-02), XP002353580 New York (USA) Retrieved from the Internet: URL:www.rotronic-usa.com/datasheets/ds/hyg roclip.pdf> [retrieved on 2005-11-09]
- LINDY COMPUTER CONNECTION TECHNOLOGY: "Humidity sensor" RACK MONITORING SYSTEM, [Online] 18 February 2005 (2005-02-18), XP002353581 Retrieved from the Internet: URL:www.lindy.com/uk/downloads/manuals/324 21.1pdf> [retrieved on 2005-11-09]

## Description

The present invention relates to a humidity sensor for detecting the humidity of articles like laundry or shoes while drying them in a dryer, in particular in a tumble dryer. Further it relates to a shoetree and a dryer having a humidity detector.

In a conventional dryer the humidity of the laundry placed into a drum of the dryer can be detected by measuring the air humidity or moisture of the drying air. Another way to detect the humidity is to use electrodes arranged at the drum and isolated to each other such that the conductivity as a measure for the humidity of the laundry is measured when the damp laundry bridges the two contacts. The drying process is stopped as soon as the air moisture or the conductivity across the electrodes falls below a predetermined level.

US-A-2, 740, 032 disclosed an electric hygrometer for sensing the electrical resistance to thereby detect the moisture contents of soils. Two electrodes of different types are arranged in a hygrometer body wherein the electrodes are connected to electrical cables.

In the dryer of EP 1 236 826 A2 two electrodes of a moisture sensor are arranged close to the loading door and the loading opening of a drum. During the agitation of the drum, laundry items fall onto the moisture sensor and the moisture of the laundry item is detected by measuring the resistance value between the two electrodes of the moisture sensor.

The humidity sensor of the dryer known from US-A-4, 385, 452 two electrodes of a humidity sensor are arranged on a stationary bulk head closing the back side opening of an agitated drum. Two lines connect the two electrodes to a low voltage moisture sensor.

The product profile "NTC Probes for HVAC and Home Appliances" by EPCOS in 2002 proposes to arrange a humidity sensor at the air outlet of a dryer. The humidity sensor to be mounted as component has a cable and a plug.

The humidity sensor shown in a flyer "Hydroclip - Humidity goes digital" of rotronic, printed 2/02, has an integrated A/D converter to provide a digital signal. The digital signal is transmitted over a flexible cable to a RS 232 connector to be connected to a PC serial board.

It is an object of the invention to provide a dryer having a humidity sensor, which provide a reliable humidity detection if the articles to be dried are not agitated during the drying process.

The invention is defined in claim 1.

Particular embodiments are set out in the dependent claims.

In the conventional dryer the laundry or fabrics to be dried are placed in the drum which is rotated during the drying process. The drying air contacts the surface of the textile nearly homogeneously during the movement of the laundry within the drum. Some dryers have the option to put delicate laundry or shoes in a basket which is supported in a drum such that the delicate laundry or the shoes are not agitated. In this case the drying air can not be evenly distributed over the surface of the laundry or to the inside of the shoe and the drying process requires a longer time. At the same time the humidity at the inner portion of the folded laundry or on the inside of the shoe may be much higher than the humidity on the outside. As this is different from type to type of laundry or shoes, the time to sufficiently dry the articles may vary considerably. If the longest time for drying the articles would be set as a standard drying time, this could result in a waste of energy and time for such articles placed in the basket which are quickly dried.

To overcome such problems with articles which are not agitated during the drying process, the humidity sensor of the invention is adapted to be placed within, close to or in contact with the article to be dried. For example it is placed between folded towels or inside the shoe and the humidity in the critical region of the article can be exactly monitored and the drying process can be exactly timed to the degree of predefined or pre-selected residual humidity.

In one alternative of the dryer, a connector element is arranged at the dryer, for example at its body, to temporarily connect a humidity sensor including a shoetree as mentioned above. The connector element is externally accessible for the user without demounting parts of the dryer body (except a cap or cover designed for the connector element).

In the other alternative of the dryer the humidity sensor having an electric cable for freely positioning the sensor element in the drum is permanently connected to the dryer and the detector circuit therein. Via the flexible electric cable the sensor can be positioned in a drying compartment or taken out of the drying compartment, e.g. a drum of a tumble dryer.

The humidity sensor has a humidity sensitive element and an electric cable connected to the at least one humidity sensitive element such that an electrical connection between a detector circuit and the humidity sensitive element is made by the electric wiring in the electric cable. the electric cable is a flexible cable such that the humidity sensitive element can be disposed by the user at any freely selectable place where he wants to detect the humidity. In one alternative, the humidity sensor is preferentially detachably and temporarily connectable to a detector circuit via a connector of the dryer. A detector circuit is an electrical or electronic circuit which preprocesses a signal from the humidity sensitive element and may supply a voltage or other signal to the humidity sensitive element to operate it.

In an embodiment the humidity sensitive element is a contact measurement element which measures the humidity dependent resistivity or conductivity between two contacts. However, the humidity sensitive element may also be an element detecting the air moisture or an electromagnetic wave emitting element detecting the humidity of the surrounding articles by electromagnetic wave emission and reception.

In a preferred embodiment the humidity sensitive element is a conductivity detector and comprises at least two conductive elements arranged at an outer surface of the sensor. Thereby, the surface of the article to be dried can be contacted and the detector circuit applies a voltage across the at least two conductive elements to analyze the resistance between the elements to analyze the conductivity as a measure of the humidity.

In a preferred embodiment the electric cable comprises a plug or a socket to detachably connect the humidity sensor to a mating socket or plug. If the humidity sensor is not used to detect the humidity, it is detached and may be deposited at a convenient place. If for example in the tumble dryer the drum is rotated and the laundry is agitated therein, the humidity sensor is removed. On the other hand, if for the drying process the drum is stopped or a fixed basket is mounted to the door or another non-rotated fixed part of the dryer, the humidity sensor is connected via the plug or socket to the detector circuit in the dryer and the sensor element is placed inside or in contact with the article to be probed.

In an embodiment, a shoetree is provided having the humidity sensor integrated such that the humidity can be detected inside a shoe when the shoetree is placed therein. Preferentially, the shoetree has at least one tensioning or clamping element such that the shoe is brought in form during the drying process. It is also preferred to arrange the humidity sensor at a front section of the shoetree such that the humidity in the area of the toes is detected, where an exchange of the humid air is lowest during the drying process.

Preferentially, the connector element is arranged in the region of a loading door of the dryer such that the user can easily plug the sensor's connector and guide the sensor element into the drum's inside using the flexible cable. It is not necessary to guide the cable to the outside of the dryer through the door or at the rim of the door. In a preferred embodiment the connector element of the dryer is arranged at an air channel or a mounting frame close to the loading door.

In one embodiment the dryer has a connection detector which detects whether a humidity sensor is connected to the connector element or not. For example a switch may be located at the plug or socket and gives a switching signal to the sensor circuit; if the humidity detector is connected. By this connection signal it can be provided for example that the drum rotation is automatically stopped, if the humidity sensor is connected. Or if the user selects a drying program where the drum is agitated, he receives a warning that the separate humidity sensor is connected and has to be removed prior to rotating the drum.

In a preferred embodiment the electrical contacts of the connector in the dryer are combined with a mounting element for mounting a support or storing device in a drum of the dryer. Thereby, if the support or storing device is placed within the drum, the electrical connection to the humidity sensor is established in one step. At least the connector element is integrated in the support or storing device. In a particular embodiment a part of the cable or the complete sensor is additionally integrated in the support or storing device. No separate electrical connection is required. For example the support or storing device may be provided with the flexible cable and the sensor element can be placed between the articles to be dried. Or the humidity sensor can be integrated in a surface of the support or storing device.

Reference is made in detail to preferred embodiments of the invention, examples of which are illustrated in the accompanying drawings which show:
- Fig. 1: a schematic diagram of humidity sensors integrated in shoetrees and the electrical wiring,
- Fig. 2: a shoe with a shoetree as shown in Fig. 1 placed in a drum, and
- Fig. 3: a rack arranged within a drum.

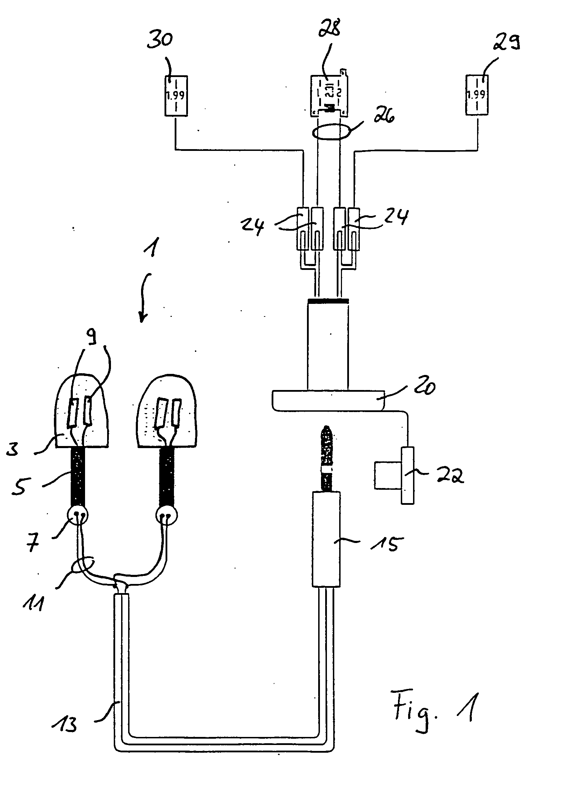

Fig. 1 shows a schematic diagram of a pair of shoetrees 1 including a humidity sensor and the electrical wiring between the humidity sensor and sensor electronics of a tumble dryer. Each shoetree 1 has a front section 3, a heel section 7 and a spiral spring 5 connecting the two sections 3, 7. On the upper surface of the front section two metal plates 9 formed of stainless steel are arranged in parallel and are connected to wires 11 guided through the spiral spring 5 to the heel section 7 where the wires 11 exit into a cable 13. The metal plates 9 of both shoetrees 1 are connected in parallel such that the conductivities between both plate pairs are measured simultaneously. At the end of the cable 13 a plug 15 is provided having a contact tip. The contact tip of the plug 15 is insertable into a socket 20. The socket 20 is mounted at the opening region of an air channel (not shown). The air channel is part of an air circulation system of the tumble dryer and has its opening directly neighboring the door opening of the dryer.

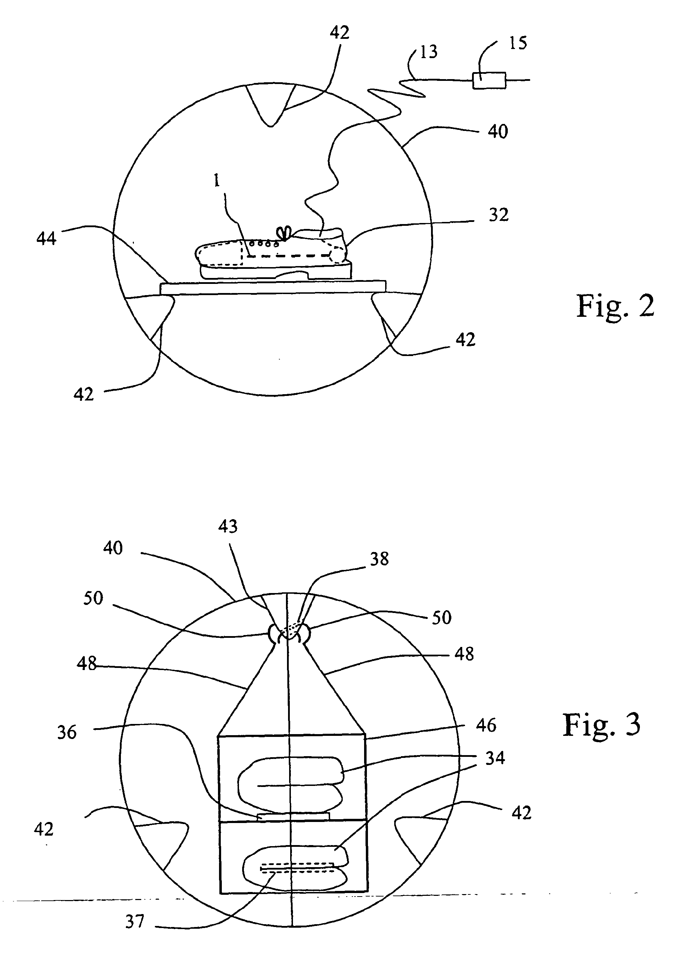

When the user wants to dry shoes in the dryer (see Fig. 2) the shoetrees 1 are placed inside the shoes 32 and the shoes are then placed within the drum. The plug 15 is inserted into the socket 20 and the door of the dryer is closed. Of course, the socket 20 is arranged such that there is enough space to plug and unplug plug 15 and to guide the flexible cable 13 from the socket to the shoetrees inside the drum without passing the gasket which is sealing the door to the dryer's housing. If the shoetrees 1 are not in use, the arrangement is unplugged and stored outside the drum. To avoid collection of dirt and fluff in the open socket it can be closed by a cap 22.

Socket 20 is electrically connected to contacts 24. At the contacts 24 lines 26 from a sensor electronics 28 are split into two parallel lines, the one going to socket 20 and from there to the shoetrees 1. One wire of the other parallel lines runs to a ground contact 29 of the dryer and one wire runs to a sliding contact 30. In the normal tumble drying process contacts 29 and 30 are used to make conductivity measurements within the drum during the rotation of the drum. In this case, the two electrically isolated contacts for the conductivity measurement are placed at the inside of the drum and one element is connected via ground connection and the other via the sliding contact 30 to the sensor electronics 28. Sensor electronics 28 processes the signal either from the inside of the drum or from the shoetree 1 or other humidity detector connected to socket 20 and outputs a preprocessed signal to the control electronics of the tumble dryer.

Fig. 2 shows one example for using the shoetrees shown in Fig. 1. In this case, the tumble dryer has a special program or a program option which stops the rotation of the drum for drying operation with the drum at halt. Of course, the inventive humidity detector can also be used when the drum is rotating, for example when a basket or a similar support is used which is mounted at the opening or at the door of the dryer such that the basket or support does not rotate. In the arrangement of Fig. 2 a shelf 44 is placed between rips 42 of a drum 40 which is not rotating during the drying process. A pair of shoes 32 is placed on the shelf 44 and the shoetrees 1 have been inserted into the shoes 32. As mentioned above, the plug 15 is inserted into the socket 20 close to the door's opening.

Fig. 3 shows two other examples for the humidity sensor. Again, the drum 40 is stopped during the special drying program and a rip 43 is provided with contact holes 38. A rack 46 is placed in the inside of the drum 40 and hooks 50 connected via cords 48 to the rack are hooked into the contact holes 38. Towels 34 are shown as placed in the compartments of the rack 46.

In the first.embodiment shown in Fig. 3 a contact plate 37 is placed in the lower towel 34. Plate 37 has two electrodes spaced apart from each other for contacting the towel (similar to metal plates 9 shown in Fig. 1). As in the example of Fig. 2, a cable having a plug 15 is connected to contact plate 37 and the plug 15 is inserted into the socket 20.

In the second embodiment of Fig. 3 a sensor plate 36 is integrated in the upper compartment shelf of the rack 46. The plate 36 is connected via flexible wires within the bottom and side walls of the rack which are guided through the cords 48 to the hooks 50 where they electrically contact corresponding contact elements within the contact holes 38. The contact elements within the contact holes 38 are thereby connected in parallel to electrodes (not shown) in the drum. The drum's electrodes are used for detecting the conductivity of tumbled laundry when the drum 40 is rotated.

### Reference Numerals List

- 1: shoetree
- 3: front section
- 5: spiral spring
- 7: heel section
- 9: plate
- 11: wire
- 13: cable
- 15: plug
- 20: socket
- 22: cap
- 24: connector
- 26: wire
- 28: detector circuit

- 29: ground contact
- 30: sliding contact
- 32: shoe
- 34: towel
- 36: sensor plate
- 37: contact plate
- 38: contact hole
- 40: drum
- 42, 43: rip
- 44: shelf
- 46: rack
- 48: cord
- 50: hook

## Claims

1. Dryer, in particular tumble dryer or washing machine having dryer function, comprising:
a drying compartment (40), in particular a drum,
a humidity sensor (1, 36, 37), and
a detector circuit (28) adapted to receive a signal from the humidity sensor,
wherein the humidity sensor is adapted to detect the humidity of an article (32, 34) and comprises at least one humidity sensitive element (9), and an electric cable (13) connected to the at least one humidity sensitive element (9),
wherein the humidity sensor is permanently connected to the detector circuit (28) or is connectable to the detector circuit (28) by a connection of a connector (15) at the electrical cable (13) to a connector element (20, 38) of the dryer; and
wherein the electrical cable (13) is flexible such that the humidity sensitive element (9) is freely positionable within the article (32, 34) or in contact with the article inside the drying compartment (40), in particular in a drum (40) of the dryer.

2. Dryer according to claim 1, comprising a deposition compartment arranged at the dryer's body and adapted to receive the humidity sensor (1, 36, 37) and at least a portion of the flexible cable (13).

3. Dryer according to claim 1 or 2, wherein the connector (15) is a plug or a socket.

4. Dryer according to claim 1, 2 or 3, wherein the humidity sensor is adapted to detect humidity of an article (32, 34) by contacting the article, the at least one humidity sensitive element (9) comprising:
at least two conductive elements, and
at least one supporting element (3) supporting each of the conductive elements at a distance and being electrically insulated to the other conductive elements,
wherein the electrical cable (13) comprises at least two wires (11) each electrically connected to one of the conductive elements.

5. Dryer according to claim 4, wherein the at least one humidity sensitive element (9) is a conductivity detector and the at least two conductive elements are arranged at an outer surface of the sensor (1).

6. Dryer according to claim 4 or 5, wherein the conductive elements have a two-dimensional outer surface, in particular a plane outer surface.

7. Dryer according to claim 6, wherein the outer shape of the sensor is flat.

8. Dryer according to any of the previous claims, wherein the humidity sensor is integrated in a shoetree (1) for detecting the humidity in a shoe (32).

9. Dryer according to claim 8, wherein the humidity sensor is a contact sensor (9) adapted to detect humidity of an article (32, 34) by contacting the article, or a contactless sensor.

10. Dryer according to claim 8 or 9, wherein the humidity sensor is arranged at a front section (3) of the shoetree, in particular in the region of the pad or the instep.

11. Dryer according to any of claims 1 to 7, wherein the humidity sensor is at least partially integrated in a storing device (46), in particular a basket or a rack, adapted to store articles to be dried in a drum of a dryer.

12. Dryer according to claim 1 or 2, wherein the connector element (20) is a plug or a socket paired to the connector (15) being a socket or plug of the humidity sensor (1, 37) to be temporarily connected.

13. Dryer according to claim 1, 2 or 12, wherein the connector element (20) is arranged in the region of a loading door of the dryer, in particular at an air channel or at a mounting frame for a lint filter.

14. Dryer according to any of claims 1, 2 or 12 to 13, wherein the connector element (38) or an additional connector element is arranged at the drum.

15. Dryer according to claim 14, wherein the connector element (38) is combined with a mounting element adapted to support a storing device (44, 46) in a drum (40) of the dryer.

16. Dryer according to any of claims 1, 2 or 12 to 15, comprising a cap (22) adapted to cover the electrical contacts of the connector (20, 38) if the humidity sensor (1, 36, 37) is disconnected.

17. Dryer according to any of claims 1, 2 or 12 to 16, comprising a connection detector adapted to detect the humidity sensor (1, 36, 37) being connected and to transmit a connect signal to a control unit of the dryer.

## Patentansprüche

1. Trockner, insbesondere Trommelwäschetrockner oder Waschmaschine mit Trocknerfunktion, umfassend:
Ein Trocknerabteil (40), insbesondere eine Trommel,
einen Feuchtigkeitssensor (1, 36, 37), und
einen Detektorschaltkreis (28), der geeignet ist, ein Signal vom Feuchtigkeitssensor zu empfangen,
wobei der Feuchtigkeitssensor geeignet ist, die Feuchtigkeit eines Artikels (32, 34) festzustellen und mindestens ein feuchtigkeitsempfindliches Element (9) umfasst, ferner ein Stromkabel (13), das mit dem mindestens einen feuchtigkeitsempfindlichen Element (9) verbunden ist,
wobei der Feuchtigkeitssensor permanent mit dem Detektorschaltkreis (28) verbunden ist oder mit dem Detektorschaltkreis (28) mittels Anschlusses eines Steckverbinders (15) am Stromkabel (13) an ein Steckelement (20, 38) des Trockners verbunden werden kann; und
wobei das Stromkabel (13) so flexibel ist, dass das feuchtigkeitsempfindliche Element (9) frei innerhalb des Artikels (32, 34) oder in Kontakt mit dem Artikel innerhalb des Trocknerabteils (40) positioniert werden kann, insbesondere in einer Trommel (40) des Trockners.

2. Trockner gemäß Anspruch 1, der ein am Gehäuse des Trockners angeordnetes Aufbewahrungsfach aufweist, das dazu ausgeführt ist, den Feuchtigkeitssensor (1, 36, 37) und mindestens einen Teil des flexiblen Kabels (13) aufzunehmen.

3. Trockner gemäß Anspruch 1 oder 2, wobei der Steckverbinder (15) ein Stecker oder eine Steckdose ist.

4. Trockner gemäß Anspruch 1, 2 oder 3, wobei der Feuchtigkeitssensor geeignet ist, die Feuchtigkeit eines Artikels (32, 34) durch Kontaktieren des Artikels festzustellen, wobei das mindestens eine feuchtigkeitsempfindliche Element (9) umfasst:
mindestens zwei leitende Elemente, und
mindestens ein Tragelement (3), das jedes der leitfähigen Elemente in einem Abstand und von den anderen leitfähigen Elementen elektrisch isoliert trägt,
wobei das Stromkabel (13) mindestens zwei Leiter (11) umfasst, die jeweils elektrisch mit einem der leitfähigen Elemente verbunden sind.

5. Trockner gemäß Anspruch 4, wobei das mindestens eine feuchtigkeitsempfindliche Element (9) ein Leitfähigkeitsdetektor ist und die mindestens zwei leitfähigen Elemente an einer Außenoberfläche des Sensors (1) angeordnet sind.

6. Trockner gemäß Anspruch 4 oder 5, wobei die leitfähigen Elemente eine zweidimensionale Außenoberfläche aufweisen, insbesondere eine ebene Außenoberfläche.

7. Trockner gemäß Anspruch 6, wobei die äußere Form des Sensors flach ist.

8. Trockner gemäß einem der vorangehenden Ansprüche, wobei der Feuchtigkeitssensor in einen Schuhspanner (1) integriert ist, um die Feuchtigkeit in einem Schuh (32) festzustellen.

9. Trockner gemäß Anspruch 8, wobei der Feuchtigkeitssensor ein Kontaktsensor (9) ist, der dazu geeignet ist, die Feuchtigkeit eines Artikels (32, 34) durch Kontaktieren des Artikels festzustellen, oder ein kontaktloser Sensor ist.

10. Trockner gemäß Anspruch 8 oder 9, wobei der Feuchtigkeitssensor in einem vorderen Abschnitt (3) des Schuhspanners angeordnet ist, insbesondere im Bereich des Ballens oder des Rists.

11. Trockner gemäß einem der Ansprüche 1 bis 7, wobei der Feuchtigkeitssensor zumindest teilweise in eine Aufbewahrungsvorrichtung (46) integriert ist, insbesondere in einen Korb oder ein Gestell, die geeignet sind, die in einer Trommel eines Trockners zu trocknenden Artikel aufzubewahren.

12. Trockner gemäß Anspruch 1 oder 2, wobei das Steckelement (20) ein Stecker oder eine Steckdose ist, zugeordnet einem Steckelement (15), das eine Steckdose oder ein Stecker des Feuchtigkeitssensors (1, 37) ist, um vorübergehend verbunden zu werden.

13. Trockner gemäß Anspruch 1, 2 oder 12, wobei das Steckelement (20) im Bereich einer Ladetür des Trockners angeordnet ist, insbesondere an einem Luftkanal oder einem Montagerahmen für ein Flusenfilter.

14. Trockner gemäß einem der Ansprüche 1, 2 oder 12 bis 13, wobei das Steckelement (38) oder ein zusätzliches Steckelement an der Trommel angeordnet ist.

15. Trockner gemäß Anspruch 14, wobei das Steckelement (38) mit einem Montageelement kombiniert ist, das geeignet ist, eine Aufbewahrungsvorrichtung (44, 46) in einer Trommel (40) des Trockners zu tragen.

16. Trockner gemäß einem der Ansprüche 1, 2 oder 12 bis 15, der eine Kappe (22) umfasst, die dazu ausgeführt ist, die elektrischen Kontakte des Steckelements (20, 38) abzudecken, wenn der Feuchtigkeitssensor (1, 36, 37) getrennt ist.

17. Trockner gemäß einem der Ansprüche 1, 2 oder 12 bis 16, der einen Anschlussdetektor umfasst, welcher geeignet ist, den Anschlusszustand des Feuchtigkeitssensors (1, 36, 37) festzustellen und ein Anschlusssignal an eine Steuerungseinheit des Trockners zu übertragen.

## Revendications

1. Séchoir, en particulier séchoir par culbutage ou machine à laver ayant une fonction de séchage, comprenant:
un compartiment de séchage (40), en particulier un tambour,
un capteur d'humidité (1, 36, 37), et
un circuit de détection (28) apte à recevoir un signal du capteur d'humidité,
où le capteur d'humidité est apte à détecter l'humidité d'un article (32, 34) et comprend au moins un élément réagissant à l'humidité (9), et un câble électrique (13) relié à au moins un élément sensible à l'humidité précité (9),
où le capteur d'humidité est relié en permanence au circuit de détection (28) ou peut être relié au circuit de détection (28) par une connection d'un connecteur (15) au câble électrique (13) à un élément connecteur (20, 38) du séchoir; et
où le câble électrique (13) est flexible de telle sorte que l'élément réagissant à l'humidité (9) peut être positionné librement dans l'article (32, 34) ou en contact avec l'article à l'intérieur du compartiment de séchage (40), en particulier dans un tambour (40) du séchoir.

2. Séchoir selon la revendication 1, comprenant un compartiment de stockage agencé au corps du séchoir et apte à recevoir le capteur d'humidité (1, 36, 37) et au moins une portion du câble flexible (13).

3. Séchoir selon la revendication 1 ou 2, dans lequel le connecteur (15) est une prise de courant ou une douille.

4. Séchoir selon la revendication 1, 2 ou 3, dans lequel le capteur d'humidité est apte à détecter l'humidité d'un article (32, 34) en venant en contact avec l'article, le au moins un élément réagissant à l'humidité (9) comprenant:
au moins deux éléments conducteurs, et
au moins un élément de support (3) supportant chacun des éléments conducteurs à une distance et électriquement isolé des autres éléments conducteurs,
où le câble électrique (13) comprend au moins deux fils (11), chacun relié électriquement à l'un des éléments conducteurs.

5. Séchoir selon la revendication 4, dans lequel le au moins un élément réagissant à l'humidité (9) est un détecteur de conductivité, et les au moins deux éléments conducteurs sont agencés à une surface extérieure du capteur (1).

6. Séchoir selon la revendication 4 ou 5, dans lequel les éléments conducteurs ont une surface extérieure bidimensionnelle, en particulier une surface extérieure plane.

7. Séchoir selon la revendication 6, dans lequel la forme extérieure du capteur est plate.

8. Séchoir selon l'une quelconque des revendications précédentes, dans lequel le capteur d'humidité est intégré dans un embauchoir (1) pour détecter l'humidité dans une chaussure (32).

9. Séchoir selon la revendication 8, dans lequel le capteur d'humidité est un capteur de contact (9) apte à détecter l'humidité d'un article (32, 34) en venant en contact avec l'article, ou un capteur sans contact.

10. Séchoir selon la revendication 8 ou 9, dans lequel le capteur d'humidité est agencé à une section frontale (3) de l'embauchoir, en particulier dans la région du tampon ou du cou-de-pied.

11. Séchoir selon l'une quelconque des revendications 1 à 7, dans lequel le capteur d'humidité est au moins partiellement intégré dans un dispositif de stockage (46), en particulier un panier ou étagère, apte à stocker des articles à sécher dans un tambour d'un séchoir.

12. Séchoir selon la revendication 1 ou 2, dans lequel l'élément de connecteur (20) est une prise de courant ou une douille appariée au connecteur (15) qui est une douille ou prise de courant du capteur d'humidité (1, 37) à connecter temporairement.

13. Séchoir selon la revendication 1, 2 ou 12, dans lequel l'élément de connecteur (20) est agencé dans la région d'une porte de chargement du séchoir, en particulier à un canal d'air ou à un cadre de montage d'un filtre de charpie.

14. Séchoir selon l'une quelconque des revendications 1, 2 ou 12 à 13, où l'élément de connecteur (38) ou un élément de connecteur additionnel est agencé au tambour.

15. Séchoir selon la revendication 14, où l'élément de connecteur (38) est combiné avec un élément de montage apte à supporter un dispositif de stockage (44, 46) dans un tambour (40) du séchoir.

16. Séchoir selon l'une quelconque des revendications 1, 2 ou 12 à 15, comprenant un capuchon (22) apte à couvrir les contacts électriques du connecteur (20, 38) si le capteur d'humidité (1, 36, 37) est déconnecté.

17. Séchoir selon l'une quelconque des revendications 1, 2 ou 12 à 16, comprenant un détecteur de connection apte à détecter le capteur d'humidité (1, 36, 37) connecté et à transmettre un signal de connection à l'unité de commande du séchoir.
